# EUROPÄISCHE PATENTANMELDUNG

(11) **EP 1 000 885 A1**
(43) Veröffentlichungstag der Anmeldung: **17.05.2000**
(21) Anmeldenummer: 99120801.8
(22) Anmeldetag: 21.10.1999
(51) Int. Cl.: B65G 53/66

(54) **Vorrichtung zum gravimetrischen Dosieren und pneumatischen Saugfördern von fluidisierbaren Schüttgütern**

(30) Priorität: 04.11.1998 DE 19850821
(71) Anmelder: Wacker-Chemie GmbH, 81737 München (DE)
(72) Erfinder: Grune, Burkhard, 84489 Burghausen (DE); Huber, Helmut, 84547 Emmerting (DE); Duschl, Dieter, 84508 Burgkirchen (DE)
(74) Vertreter: Potten, Holger

(57) **Zusammenfassung**

Vorrichtung zum Dosieren von fluidisierbaren Schüttgütern mit einem Vorratsbehälter (1) und einer Mengenstrommeßeinrichtung (5) für das Gut und einer Fluidisiervorrichtung (2), die mit dem Vorratsbehälter (1) über eine in der Größe verstellbaren Öffnung (3) verbunden ist und einem Regelventil (10) zur Regelung der Druckluftzufuhr zur Fluidisiervorrichtung (2) dadurch gekennzeichnet, daß in Strömungsrichtung hinter der Fluidisiervorrichtung (2) ein Druckmesser (4) vorhanden ist und Druckmesser (4) und Regelventil (10) über einen ersten Regelkreis (7) verbunden sind und durch diesen Regelkreis (7) die Druckluftzufuhr zur Fluidisiervorrichtung (2) derart dosiert wird, daß in der Fluidisiervorrichtung (2) ein konstanter, jeweils vorwählbarer Unterdruck herrscht und die Mengenstrommeßeinrichtung (5) und die in der Größe verstellbare Öffnung (3) über einen zweiten Regelkreis (6) verbunden sind, und durch diesen Regelkreis (6) die Größe der verstellbaren Öffnung (3) derart eingestellt wird, daß eine definierte Menge an Schüttgut in die Fluidisiervorrichtung (2) eintritt.

## Beschreibung

Die Erfindung betrifft eine Vorrichtung zum gravimetrischen Dosieren und pneumatischen Saugfördern von fluidisierbaren Schüttgütern.

Die Dosierung und der pneumatische Transport der dosierten Mengen an fluidisierbaren Schüttgütern ist grundsätzlich bekannt. Der Transport von einem Vorratsbehälter in einen Empfangsbehälter kann dabei mittels Druckförderung oder mittels Saugförderung erfolgen. DE 4109960 A1 nennt in Spalte 1, zweiter Absatz die Vorteile der Saugförderung gegenüber der Druckförderung und beschreibt eine Anlage zur pneumatischen Saugförderung, bei der Maßnahmen getroffen wurden um die Verstopfungsgefahr zu minimieren.

Ein anderes Problem der Saugförderung ist die Dosiergenauigkeit des geförderten Schüttgutes. Bisher ist bei der Saugförderung die volumetrische Dosierung des Schüttgutes bekannt. Dieses Verfahren eignet sich aufgrund der wechselnden Unterdrücke im Empfangsgefäß und damit in der Förderleitung nicht zur genauen Dosierung des Schüttgutes. Damit ist die Saugförderung bisher insbesondere für moderne Produktionsanlagen, in denen wechselnde Schüttgüter mit hoher Genauigkeit dosiert werden müssen, ungeeignet.

Aufgabe der Erfindung ist es, eine Vorrichtung zur Verfügung zu stellen, die mit hoher Genauigkeit eine Dosierung von fluidisierbaren Schüttgütern unter den Bedingungen der Saugförderung ermöglicht.

Die Erfindung betrifft eine Vorrichtung zum Dosieren von fluidisierbaren Schüttgütern mit einem Vorratsbehälter und einer Mengenstrommeßeinrichtung für das Gut und einer Fluidisiervorrichtung die mit dem Vorratsbehälter über eine in der Größe verstellbaren Öffnung verbunden ist und einem Regelventil zur Regelung der Druckluftzufuhr zur Fluidisiervorrichtung dadurch gekennzeichnet, daß in Strömungsrichtung hinter der Fluidisiervorrichtung ein Druckmesser vorhanden ist und Druckmesser und Regelventil über einen ersten Regelkreis verbunden sind und durch diesen Regelkreis die Druckluftzufuhr zur Fluidisiervorrichtung derart dosiert wird, daß in der Fluidisiervorrichtung ein konstanter, jeweils vorwählbarer Unterdruck herrscht und die Mengenstrommeßeinrichtung und die in der Größe verstellbare Öffnung über einen zweiten Regelkreis verbunden sind, und durch diesen Regelkreis die Größe der verstellbaren Öffnung derart eingestellt wird, daß eine definierte Menge an Schüttgut in die Fluidisiervorrichtung eintritt.

Bei der Mengenstrommeßeinrichtung handelt es sich vorzugsweise um eine "Loss in weight" Mengenstrommeßeinrichtung.

Vorzugsweise umfaßt die erfindungsgemäße Vorrichtung in Strömungsrichtung hinter dem Druckmesser ein Ventil, das es erlaubt, fluidisierbares Gut aus der Saugleitung abzuzweigen und gegebenenfalls in einen Rückführbehälter zurückzuführen. Vorzugsweise ist dieses Ventil in den ersten Regelkreis eingebunden.

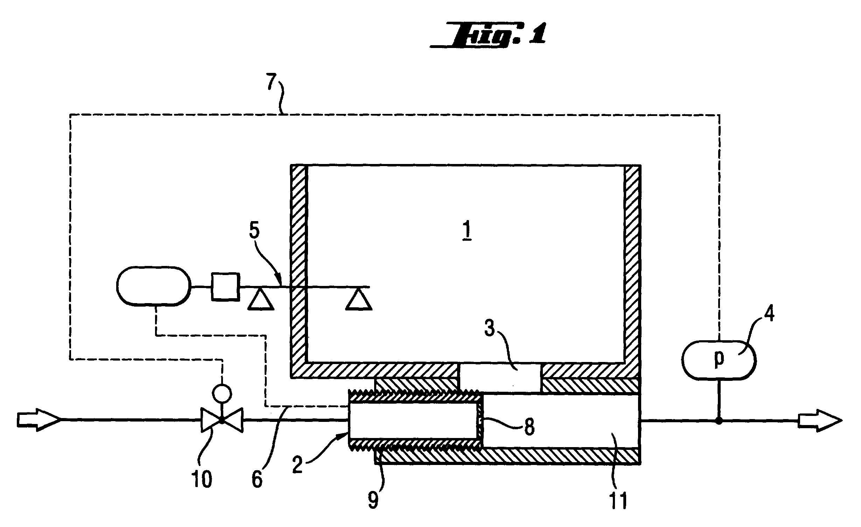

Eine Ausführungsform der erfindungsgemäßen Vorrichtung ist in Fig. 1 dargestellt. Zwischen dem Vorratsbehälter **1** und der Fluidisiervorrichtung **2** befindet sich die in ihrer Größe einstellbare Öffnung **3**. Die Vorrichtung besitzt in Strömungsrichtung des Gutes nach der Fluidisierungsvorrichtung **2** einen Druckmesser **4**. Die Vorrichtung enthält eine Mengenstrommeßeinrichtung **5** für das fluidisierbare Gut in der Form einer Differentialwaage. Die Mengenstrommeßeinrichtung **5** befindet sich in Strömungsrichtung des fluidisierbaren Gutes vor der Fluidisiervorrichtung **2**. Die Mengenstrommeßeinrichtung **5** ist über einen ersten Regelkreis **6** mit der in der Größe einstellbaren Öffnung verbunden und steuert über Variation der Öffnungsgröße den Mengenfluß des Schüttguts in die Fluidisiervorrichtung **2**.

Die Fluidisiervorrichtung **2** wird durch eine Gasaustrittsöffnung **8** in der Form einer Düse gebildet, durch die ein Fluidisiergas, vorzugsweise Preßluft, auf das zu fluidisierende Gut trifft. Dabei läßt sich die Düse **8** (z.B. über ein Gewinde **9**) derart in oder entgegen der Strömungsrichtung des fluidisierbaren Gutes bewegen, daß durch diese Bewegung die Öffnung **3** verengt bzw. erweitert wird. Die jeweilige Öffnungsgröße wird über den bereits genannten ersten Regelkreis **6** gesteuert.

Der Druck mit dem das Fluidisiergas durch die Gasaustrittsöffnung **8** in die Wirbelkammer **11** eintritt, wird über einen zweiten Regelkreis, der durch den Druck am Druckmesser **4** gesteuert wird, mittels eines Druckreglers **10** derart eingestellt, daß im Bereich der einstellbaren Öffnung eine jeweils konstanter Unterdruck herrscht.

Das fluidisierbare Gut, in der Form eines feinteiligen Schüttgutes, gelangt vom Vorratsbehälter **1** aufgrund des in der Fluidisiervorrichtung **2** herrschenden Unterdrucks durch die in ihrer Größe einstellbare Öffnung **3** in die Wirbelkammmer **11**. In dieser Wirbelkammer **11** trifft das Fluidisiergas auf das Gut und macht es fließfähig. Durch Einstellung der Öffnung **3** und des Fluidisiergasdrucks kann der Strom an fluidisierbarem Gut und der der Saugförderung dienende Unterdruck in weiten Bereichen unabhängig voneinander schnell und sehr genau reguliert werden.

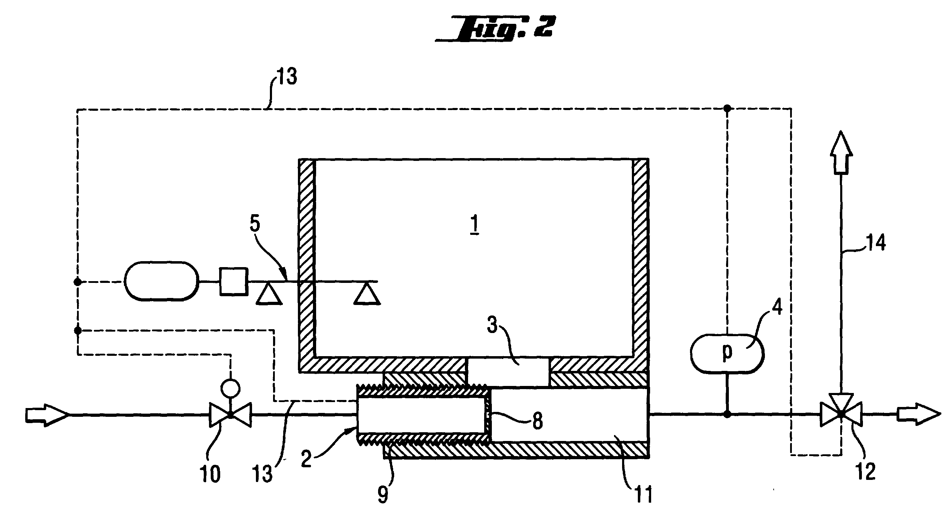

Eine bevorzugte Ausführungsform der Erfindung zeigt Figur 2. Zusätzlich zu den in Figur 1 genannten Maßnahmen besitzt diese Ausführungsform in Strömungsrichtung hinter dem Druckmesser **4** ein Ventil **12**, das es erlaubt, fluidisierbares Gut abzuzweigen und gegebenenfalls in einen Rückführbehälter **14** zurückzuführen solange laut Mengenstrommeßeinrichtung **5** der dosierte Mengenstrom sich noch nicht oder nicht mehr in dem angestrebten Dosierbereich befindet. Dieses Ventil 12 kann ebenfalls über den ersten Regelkreis **6** gesteuert werden. In der in Figur 2 dargestellten bevorzugten Ausführungsform sind die Regelkreise 1 und 2 zu einem kombinierten Regelkreis **13** zusammengefaßt. Ein solcher kombinierter Regelkreis **13** ist gegenüber zwei getrennten Regelkreisen bevorzugt. Er ermöglicht eine wechselseitige Beeinflussung aller genannten Meß- und Regeleinrichtungen aufeinander und somit ein noch schnellere und feinere Regulierung der Dosierung und der Druckverhältnisse in der Saugförderung.

Die erfindungsgemäße Vorrichtung ermöglicht durch gezielte Veränderung der Öffnungsgröße und gezielte Veränderung des Drucks des Fluidisiergases sowohl den Unterdruck im Bereich der Fluidisiervorrichtung als auch den Mengenfluß des Schüttgutes sehr gezielt und genau einzustellen und zu variieren. Eine Verknüpfung der Regelkreise für die Öffnungsgröße und die Druckveränderung des Fluidisiergases und eine entsprechende Voreinsteilung der Parameter des Regelkreises ermöglicht darüber hinaus eine selbsttätige Regulierung der Parameter und eine selbsttätige Anpassung der Parameter an die jeweilige optimale Betriebsbedingung.

In einer bevorzugten Ausführungsform kann der Dosierstrom stromabwärts von der Druckmeßvorrichtung über ein Ventil **12** umgeleitet werden. Dies ermöglicht es, während der Anfahrzeit der Vorrichtung, d.h. wenn die Dosierung noch nicht exakt genug ist, den Strom an fluidisierbarem Gut vom Dosierstrom abzuzweigen. Dafür kann es sinnvoll sein, in der Vorrichtung einen Vorratsbehälter für das abgezweigte Gut oder eine Vorrichtung für dessen Rückführung in den Vorratsbehälter **1** vorzusehen. Außerdem ist es über das Ventil **12** auch möglich, den Strom an fluidisierbarem Gut mit anderen Produktströmen zeitlich zu koordinieren.

Die erfindungsgemäße Vorrichtung ermöglicht es, leichte und fluidisierbare Schüttgüter auch in Kleinstmengen mit hoher Genauigkeit in Vakuumkammern oder Unterdruckleitungen zu dosieren. Je nach Erfordernis ist es dabei auch möglich, einen definierten Unterdruck im Empfangsbehälter aufrechtzuerhalten.

Die erfindungsgemäße Vorrichtung eignet sich hervorragend zum kontinuierlichen Dosieren feinteiliger Feststoffe geringer Schüttdichte bei der Saugförderung. Die Dosierung erfolgt aufgrund der geregelten Zufuhr von Druckluft durch die Fluidisierdüse bei einem konstanten Unterdruck im Bereich der Dosiervorrichtung und ist somit unabhängig von etwaigen Schwankungen die in der Saugleitung z. B. aufgrund von Druckschwankungen im Empfangsgefäß auftreten.

Die Düsenluft sorgt in Verbindung mit dem Druckregler **10** (Durchflußregelventil) für einen gleichmäßigen Differenzdruck und damit für einen gleichmäßigen Saugstrom in Förderrichtung auch bei prozeßbedingten Schwankungen des Unterdrucks von etwa 100 bis 750 mbar.

Die erfindungsgemäße Vorrichtung eignet sich insbesondere auch zur gravimetrischen Feindosierung von Schüttgütern in Mengen von vorzugsweise 500 g/h bis 200 kg/h.

Die Vorrichtung ermöglicht eine Dosierung mit hoher Kurzzeitgenauigkeit. Sie ermöglicht zudem ein einfaches Umstellen auf unterschiedliche Schüttgüter mit verschiedensten Produkteigenschaften.

Auch Feststoffe, deren Schüttdichte sehr stark druckabhängig ist, lassen sich exakt dosieren.

Die Vorrichtung läßt sich beispielsweise einsetzen zum Dosieren von feinteiligen Füllstoffen, beispielsweise zur Herstellung von Kunststoffmischungen, Antischaummitteln und dergleichen mehr. Die Vorrichtung eignet sich besonders für die Dosierung feinteiliger fluidisierbarer Schüttgüter in kontinuierlich, mit Unterdruck arbeitende dynamische Mischer.

Beispiele für nach der erfindungsgemäßen Vorrichtung dosierbare Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen.

Besonders geeignet ist die erfindungsgemäße Vorrichtung zur Dosierung von hochdisperser Kieselsäure.

Das fluidisierbare Gut kann in einem Mischer, Kneter, Rührer oder dergleichen mehr mit anderen Bestandteilen vermischt werden.

Beispiele für solche anderen Bestandteile sind Bestandteile von Kunststoffmischungen, wie Härter bzw. Vernetzer, Katalysator, Polymer, Weichmacher, Haftvermittler, Duftstoffe, UV-Absorber, Bactericide, Fungicide und Pigmente.

Beispiele für Polymere sind organische synthetische Polymere wie Polyvinylchlorid, Polyethylen, Polypropylen, Polyvinylacetat, Polycarbonat, Polyacrylat, Polymethacrylat, Polymethylmethacrylat, Polystyrol, Polyacrylnitril, Polyvinyliden-chlorid, Polyvinylfluorid, Polyvinylidenfluorid, Polyvinylidencyanid, Polybutadien, Polyisopren, Polyether, Polyester, Polyamid, Polyimid, Silikone, Polyvinylalkohol, Polyvinylpyrrolidon, Polyacrylamid, Polyethylenglykol und deren Derivate und ähnliche einschließlich Copolymere wie Styrol-Acrylat Copolymere, Vinylacetat-Acrylat Copolymere und Ethylen-Vinylacetat Copolymere sowie natürliche Polymere wie Cellulose, Stärke, Casein und natürliches Gummi, sowie halbsynthetische hochmolekulare Verbindungen wie Cellulosederivate, z. B. Methylcellulose, Hydroxymethylcellulose und Carboxymethylcellulose.

### Liste der Bezugszeichen

- **1**: Vorratsbehälter
- **2**: Fluidisiervorrichtung
- **3**: In ihrer Größe einstellbare Öffnung
- **4**: Druckmesser
- **5**: Mengenstrommeßeinrichtung
- **6**: Regelkreis 1 (Öffnungsgröße/Mengenstrommeßeinrichtung)
- **7**: Regelkreis 2 (Druckmesser/Druckregler)
- **8**: Gasaustrittsöffnung, insbesondere Düse
- **9**: Gewinde
- **10**: Druckregler
- **11**: Wirbelkammer
- **12**: Ventil
- **13**: Kombinierter Regelkreis
- **14**: Zuleitung zum Rückführbehälter

## Patentansprüche

1. Vorrichtung zum gravimetrischen Dosieren von fluidisierbaren Schüttgütern in einem Saugfördersystem mit einem Vorratsbehälter und einer Mengenstrommeßeinrichtung für das Gut und einer Fluidisiervorrichtung, die mit dem Vorratsbehälter über eine in der Größe verstellbaren Öffnung verbunden ist und einem Regelventil zur Regelung der Druckluftzufuhr zur Fluidisiervorrichtung dadurch gekennzeichnet, daß in Strömungsrichtung hinter der Fluidisiervorrichtung ein Druckmesser vorhanden ist und Druckmesser und Regelventil über einen ersten Regelkreis verbunden sind und durch diesen Regelkreis die Druckluftzufuhr zur Fluidisiervorrichtung derart dosiert wird, daß in der Fluidisiervorrichtung ein konstanter, jeweils vorwählbarer Unterdruck herrscht und die Mengenstrommeßeinrichtung und die in der Größe verstellbare Öffnung über einen zweiten Regelkreis verbunden sind, und durch diesen Regelkreis die Größe der verstellbaren Öffnung derart eingestellt wird, daß eine definierte Menge an Schüttgut in die Fluidisiervorrichtung eintritt.

2. Vorrichtung gemäß Anspruch 1 dadurch gekennzeichnet, daß in Strömungsrichtung hinter dem Druckmesser ein Ventil vorhanden ist, das es erlaubt, fluidisierbares Gut aus der Saugleitung abzuzweigen und gegebenenfalls in einen Rückführbehälter zu leiten.

3. Vorrichtung gemäß Anspruch 1 dadurch gekennzeichnet, daß das Ventil in den ersten Regelkreis eingebunden ist.

4. Vorrichtung gemäß einem der Ansprüche 1 bis 3, dadurch gekennzeichnet, daß es sich bei der Mengenstrommeßeinrichtung um eine "Loss in weight" Mengenstrommeßeinrichtung handelt.

5. Vorrichtung gemäß einem der Ansprüche 1 bis 4, dadurch gekennzeichnet, daß der erste und der zweite Regelkreis zu einem kombinierten Regelkreis zusammengefaßt sind.
